(19) Europäisches Patentamt

European Patent Office

Office européen des brevets

(11) **EP 1 102 240 A1**

(12) **EUROPEAN PATENT APPLICATION**
published in accordance with Art. 158(3) EPC

(43) Date of publication:
23.05.2001 Bulletin 2001/21

(51) Int. Cl.$^7$: **G10L 15/20**, G10L 21/04

(21) Application number: 00925673.6

(86) International application number:
**PCT/JP00/03113**

(22) Date of filing: 16.05.2000

(87) International publication number:
**WO 00/72308 (30.11.2000 Gazette 2000/48)**

(84) Designated Contracting States:
**AT BE CH CY DE DK ES FI FR GB GR IE IT LI LU MC NL PT SE**

(30) Priority: 21.05.1999 JP 14183899

(71) Applicant:
**MATSUSHITA ELECTRIC INDUSTRIAL CO., LTD.
Kadoma-shi, Osaka 571-8501 (JP)**

(72) Inventor: **ODA, Mikio
Yawata-shi, Kyoto 614-8279 (JP)**

(74) Representative:
**Lang, Johannes, Dipl.-Ing.
Bardehle Pagenberg Dost Altenburg Geissler Isenbruck,
Postfach 86 06 20
81633 München (DE)**

(54) **INTERVAL NORMALIZATION DEVICE FOR VOICE RECOGNITION INPUT VOICE**

(57)     In an input voice pitch normalization device (Tr) equipped in a voice recognition device (VRAp) for recognizing an input voice (Svc) uttered by unlimited speakers, and used to change a pitch of the input voice (Svu) to be in a predetermined relationship with voice recognition sample data (Psf), a pitch difference determination device (3, 5, 7, 9; #100, #200, #300, #400) determines a pitch difference (CR) between said input voice (Svu) and said voice recognition sample data (Psf), and a pitch change device (11, 3; #500) changes, based on the pitch difference (CR) determined by said pitch difference determination device (3, 5, 7, 9; #100, #200, #300, #400), a frequency of the input voice (Svu) in such a manner as to make the pitch of said input voice has a predetermined relationship (CR = 1) with the pitch of said voice recognition sample data (Psf).

F I G. 1

EP 1 102 240 A1

## Description

TECHNICAL FIELD

The present invention relates to voice recognition devices for recognizing voice no matter who is the speaker, especially being broadly capable of voice recognition processing with respect to low-pitched men, or high-pitched women and children, and more specifically, to an input voice pitch normalization device which normalizes a pitch of a recognition target voice on the basis of a pitch of a sample voice in a voice recognition device.

BACKGROUND ART

Recently, with the progression of digital signal processing technology and LSI of higher performance capabilities and lower price, voice recognition technology became popular with consumer electronic products. The voice recognition technology accordingly improves such consumer electronic products in operability. A voice recognition device principally works to recognize an input voice by converting the input voice into a digital voice signal, and then referring to a voice dictionary for sample voice data previously-provided therein for comparison with the digital voice signal. Therefore, for easy comparison with the sample voice data, a speaker whose voice is to be recognized is often asked to produce a sound in a specific manner, or to register the speaker's voice in the voice recognition device in advance, for example.

The issue herein is, specifying a speaker in the voice recognition device equipped in the consumer electric product badly impairs its usability and thus product value. To get around such problem, any sound produced by unlimited speakers is expected to be recognized as voice input. Needless to say, the voice sounds differently, and is unique to the person who is speaking. As such, for variety of sounds produced by unlimited speakers, speech speed and voice pitch are the main voice recognition hampering factors which impair accuracy of voice recognition.

As for the speech speed which is the first voice recognition hampering factor, for example, the speech speed varies depending on speakers, and some may speak faster than others. That is, voice recognition is realized by comparing an input voice with a voice of standard speed registered in a previously-provided voice dictionary. Accordingly, if a difference in speech speed therebetween exceeds a predetermined value, comparison cannot be correctly done, and thus voice recognition fails.

As for the voice pitch which is the second voice recognition factor, the voice pitch varies depending on speakers from low-pitched men to high-pitched women and children, for example. In this case also, if a difference in voice pitch between a voice registered in the previously-provided voice dictionary and a voice uttered unlimited speakers exceeds a predetermined value, comparison therebetween cannot be correctly done, and thus voice recognition fails.

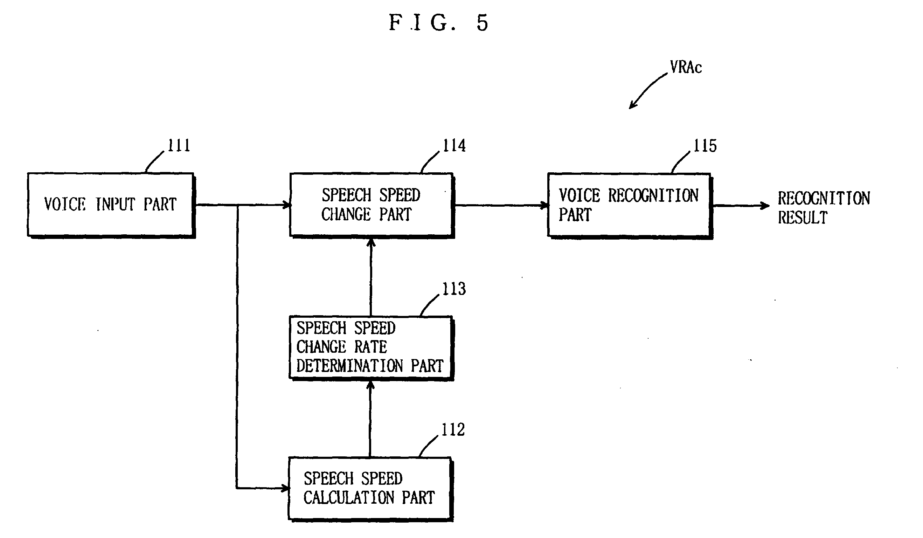

FIG. 5 shows a voice recognition device disclosed in Japanese Patent Laid-Open Publication No. 9-325798, which has been proposed to solve the above problem. As shown in the drawing, a voice recognition device VRAc includes a voice input part 111, a speech speed calculation part 112, a speech speed change rate determination part 113, a speech speed change part 114, and a voice recognition part 115.

The voice input part 111 generates a voice signal by A/D converting, into a digital signal, an analog voice signal which includes a voice uttered by unlimited speakers. The speech speed calculation part 112 calculates a speech speed of the provided voice uttered by unlimited speakers based on the voice signal. The speech speed change rate determination part 113 compares the speech speed calculated by the speech speed calculation part 112 with a reference speed, and then determines a speed change rate. Based on the speed change rate, the speech speed change part 114 changes the speech speed. Then, the voice recognition part 115 performs voice recognition with respect to the input voice signal having changed in speed by the speech speed change part 114.

Described next is the operation of the voice recognition device VRAc. The voice uttered by unlimited speakers is captured by the voice input part 111 via a microphone and an amplifier equipped therein, and then an analog signal is converted into a digital signal by an A/D converter. From thus converted voice signal in digital, the speech speed calculation part 112 extracts a sound unit of the input voice. Then, the speech speed calculation part 112 calculates the speech speed for the sound unit based on the time taken to produce the sound unit.

Here, assuming that the time taken for the speech speed calculation part 112 to produce a sound unit (hereinafter, referred to as "one-sound unit production time") is Ts, and a reference time taken for unlimited speakers to utter the sound unit (hereinafter, "one-sound unit utterance reference time") is Th. Based on those one-sound unit production time Ts and the one-sound unit utterance reference time Th, the speech speed change rate determination part 113 determines a speed change rate $\alpha$ by comparing 1/Ts and 1/Th with each other, which denote a one-sound unit production speed and a one-sound unit reference utterance speed, respectively. The speed change rate $\alpha$ can be calculated by the following equation (1).

$$\alpha = Ts/Th \qquad (1)$$

As is obvious from the above equation 1, when the one-sound unit production time Ts is shorter than the one-sound unit utterance reference time Th, that is, when the speech speed of an input voice is faster than the speech speed correctly recognizable by the voice recognition device VRAc, the speed change rate $\alpha$ is smaller than 1. If this is the case, the input voice should be decreased in speech speed. Conversely, when the one-sound unit production time Ts is longer than the one-sound unit utterance reference time Th, that is, when the speech speed of an input voice is slower than the speech speed correctly recognizable by the voice recognition device VRAc, the speed change rate $\alpha$ becomes larger than 1. In such case, the input voice should be increased in speech speed.

In the voice recognition device VRAc, the speech speed change part 114 refers to the speed change rate $\alpha$, and produces a speed-changed input voice signal to keep the speech speed constant by changing the input voice signal in speed. The voice recognition part 115 performs voice recognition processing with respect to the speed-changed input voice signal, and outputs a recognition result obtained thereby.

Such speed change can be easily realized under the recent digital technology. For example, in order to decrease the speech speed of an input voice, the voice signal may be added with several vowel waveforms having correlation with a sound unit included in the input voice to extend the time taken to produce the input voice. To increase the speech speed of an input voice, on the other hand, such vowel waveform is decimated from one sound unit of the voice signal for several times.

This is a technique called voice speed change for changing the voice speed without affecting the pitch of the input voice. That is, this technique is effective for speakers who speak faster among unlimited speakers varied in speech speed, and voices uttered by those fast speakers are recognized at better rate under the technique of voice speed change.

However, the above-described conventional voice recognition device VRAc works well for voice recognition at better rate when the voice uttered by unlimited speakers is differed from the one-sound unit reference utterance speed 1/Th, that is, for the first voice recognition hampering factor. However, this is not applicable if the voice is differently pitched compared with a reference pitch, that is, voice recognition cannot be achieved at better rate for the second voice recognition hampering factor, which is the uttered voice being differed in pitch.

In detail, although the voice recognition device VRAc can manage with a wide frequency range from low-pitched voice of men to high-pitched voice of women and children, but voice recognition cannot be achieved at better rate. For a speaker who speaks in a high speed, it is possible to ask him/her to speak moderately, but is difficult to ask him/her to speak in a different voice pitch. The speaker's throat especially in shape and size determines his/her reference speech frequency. Since the speaker cannot change his/her throat in shape by his/her intention, the speech tone cannot be changed by his/her intention, either.

For realizing voice recognition at better rate with respect to unlimited speakers' various voices with different tones, the voice recognition device VRAc shall store various sample voice data groups each correspond to different speaker such as a man, a woman, or a child speaking in different pitch. Further, the voice recognition device VRAc shall select one group among those various sample voice data groups for reference, according to the speaker's voice tone.

DISCLOSURE OF THE INVENTION

To achieve the above objects, the present invention has the following aspects.

A first aspect of the invention is directed to an input voice pitch normalization device equipped in a voice recognition device for recognizing an input voice uttered by unlimited speakers based on voice recognition sample data, and used to change a pitch of the input voice to be in a predetermined relationship with a pitch of the voice recognition sample data, the input voice pitch normalization device comprising:

　　a pitch difference determination device for determining a pitch difference between the input voice and the voice recognition sample data; and
　　a pitch change device for changing, on the basis of the pitch difference determined by the pitch difference determination device, the input voice in frequency to make the pitch of the input voice have the predetermined relationship with the pitch of the voice recognition sample data.

As described above, in the first aspect, the pitch of the input voice is adjusted in accordance with the pitch of the voice recognition sample data. Therefore, the voice recognition can be achieved at better rate.

According to a second aspect, in the first aspect,
the input voice pitch normalization device further comprises:

　　memory for temporarily storing the input voice; and
　　a read-out controller for reading a string of the input voice from the memory, and generating a recognition target voice signal, and
　　the pitch difference determination device comprising:
　　a frequency component analysis device for analyzing a frequency component in the recognition target voice signal, and generating a frequency component signal; and
　　a pitch determination device for finding a base frequency of the recognition target voice signal based on the frequency component signal, and determining a pitch difference between the voice recognition sample data and the base frequency to generate a pitch difference signal.

As described above, in the second aspect, the input voice may be a sound unit, or a word structured by several sound units.

According to a third aspect, in the second aspect, the pitch determination device can stably determine the pitch difference regardless of the recognition target voice as being structured by a single or several sound units by finding a first formant of the recognition target voice signal as the base frequency, and by comparing the first formant of the recognition target voice signal with a first formant of the voice recognition sample data to find the pitch difference therebetween.

As described above, in the third aspect, regardless of the input voice being a sound unit or a word structured by several sound units, pitch comparison with the recognition sample characteristic data is made on the input voice basis at a first formant having a stable frequency characteristic. Therefore, there is no need for processing such as producing a sound unit with respect to the input voice, and accordingly the entire processing can be facilitated and the device structure can be simplified.

According to a fourth aspect, in the third aspect, the pitch change device comprises

a read-out clock controller for generating a read-out clock signal by determining a frequency of a timing clock at the time of reading from the memory in such a manner that a frequency of the recognition target voice signal is changed based on the pitch difference signal, and
the memory outputs, based on the read-out clock, the recognition target voice signal in such a manner that a predetermined relationship in pitch is established with the voice recognition sample data.

As described above, in the fourth aspect, by changing a timing to read the memory, the pitch of the recognition target voice signal can be changed without affecting the waveform characteristic thereof. Therefore, there is no need for processing such as interpolation and decimation.

A fifth aspect is directed to a voice recognition device including the input voice pitch normalization device of claim 4.

A sixth aspect is directed to a voice recognition device for recognizing an input voice uttered by unlimited speakers based on voice recognition sample data, the device comprising:

an input voice pitch normalization device for changing a pitch of the input voice to be in a predetermined relationship with a pitch of the voice recognition sample data; and

a voice analyze device for comparing the input voice changed in pitch and the voice recognition sample data to generate a recognition signal indicating the voice recognition sample data which coincides with the input voice.

As described above, in the sixth aspect, the pitch of the input voice is adjusted in accordance with the pitch of the voice recognition sample data. Therefore, the voice recognition can be achieved at better rate.

According to a seventh aspect, in the sixth aspect, the voice recognition device further comprises:

memory for temporarily storing the input voice; and
a read-out controller for reading a string of the input voice from the memory, and generating a recognition target voice signal, and
the pitch difference determination device comprising:

a frequency component analysis device for analyzing a frequency component of the recognition target voice signal, and generating a frequency component signal; and
a pitch determination device for finding a base frequency of the recognition target voice signal based on the frequency component signal, and determining a pitch difference between the voice recognition sample data and the base frequency to generate a pitch difference signal.

As described above, in the seventh aspect, the input voice may be a sound unit, or a word structured by several sound units.

According to an eighth aspect, in the seventh aspect, the pitch determination device can stably determine the pitch difference regardless of the recognition target voice as being structured by a single or several sound units by finding a first formant of the recognition target voice signal as the base frequency, and by comparing the first formant of the recognition target voice signal with a first formant of the voice recognition sample data to find the pitch difference therebetween.

As described above, in the eighth aspect, regardless of the input voice being a sound unit or a word structured by several sound units, pitch comparison with the recognition sample characteristic data is made on the input voice at a first formant having a stable frequency characteristic. Therefore, there is no need for processing such as producing a sound unit with respect to the input voice, and accordingly the entire processing can be facilitated and the device structure can be simplified.

According to a ninth aspect, ion the eighth aspect, the pitch change device comprises

a read-out clock control device for generating a read-out clock signal by determining a frequency of a timing clock at the time of reading from the memory in such a manner that a frequency of the recognition target voice signal is changed based on the pitch difference signal, and

the memory outputs, based on the read-out clock, the recognition target voice signal in such a manner that a predetermined relationship in pitch is established with the voice recognition sample data.

As described above, in the ninth aspect, by changing a timing to read the memory, the pitch of the recognition target voice signal can be changed without affecting the waveform characteristic thereof. Therefore, there is no need for processing such as interpolation and decimation.

BRIEF DESCRIPTION OF THE DRAWINGS

FIG. 1 is a block diagram showing the structure of a voice recognition device equipped with an input voice normalization device according to an embodiment of the present invention;
FIG. 2 is a diagram showing frequency spectra of voices varied in pitch;
FIG. 3 is a diagram for assistance of explaining exemplary pitch change of voice waveforms, and a pitch change method applied thereto;
FIG. 4 is a flowchart showing the operation of the input voice normalization device shown in FIG. 1; and
FIG. 5 is a block diagram showing the structure of a conventional voice recognition device.

BEST MODE FOR CARRYING OUT THE INVENTION

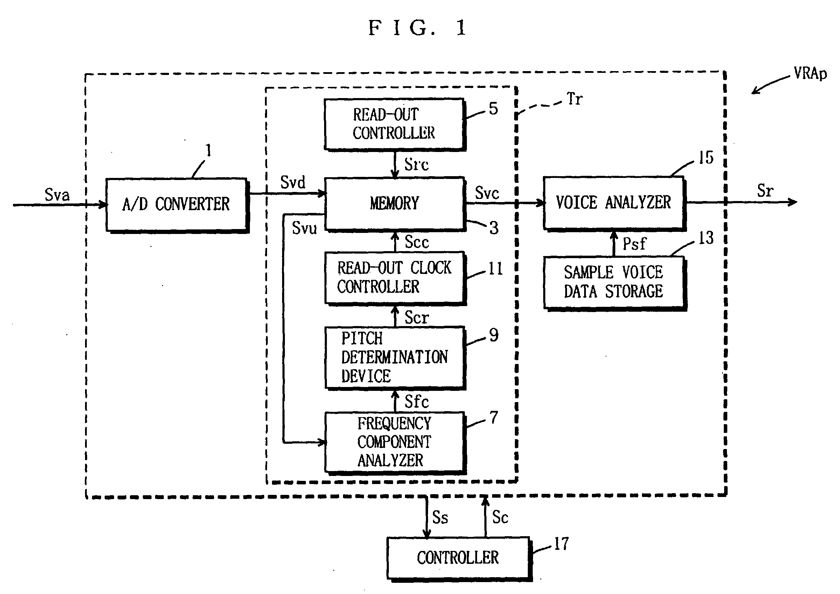

In order to describe the present invention to a greater extent, the accompanying drawings are referred to.
With reference to FIG. 1, described is a voice recognition device incorporated with an input voice normalization device according to an embodiment of the present invention. A voice recognition device VRAp includes an A/D converter 1, an input voice normalization device Tr, a sample voice data storage 13, a voice analyzer 15, and a controller 17. The sample voice data storage 13 stores voice frequency component patterns Psf to be referred to at voice recognition. The voice frequency component patterns Psf in storage are outputted at a predetermined timing. Here, a voice uttered by unlimited speakers is captured by a microphone and an amplifier (not shown), and is then supplied to the voice recognition device VRAp as an analog signal Sva.
The controller 17 generates a control signal Sc based on an operating status signal Ss indicating the operating status of the constituents in the voice recognition device VRAp such as 1, Tr, 13, and 15, and coming therefrom for controlling the operation of those constituents of 1, Tr, 13, and 15. The controller 17 comprehensively controls the operation of the voice recognition device VRAp. Note herein that, the operating status signal Ss, the operating status signal Sc, and the controller 17 are well known technology, and therefore are not described unless otherwise required for convenience.
The A/D converter 1 applies the inputted analog voice signal Sva to A/D conversion, and produces a digital voice signal Svd for output to the input voice normalization device Tr. The input voice normalization device Tr changes the pitch of the digital voice signal Svd by a sample pitch level in the voice recognition device VRAp, and produces a pitch-normalized digital voice signal Svc whose pitch has been changed. This pitch-normalized digital voice signal Svc is outputted to the voice analyzer 15. The voice analyzer 15 analyzes the pitch-normalized digital voice signal Svc provided by the input voice normalization device Tr with reference to the voice frequency patterns Psf read by the sample voice data storage 13, and then outputs a recognition signal Src which indicates the voice recognition sample data coinciding with the input voice.
Here, as shown in FIG. 1, the input voice normalization device Tr includes memory 3, a read-out controller 5, a frequency component analyzer 7, a pitch determination device 9, and a read-out clock controller 11. The memory 3 temporarily stores the digital voice signal Svd coming from the A/D converter 1. The read-out controller 5 monitors the storage of the digital voice signal Svd in the memory 3, and generates a read-out control signal Src to bring the memory 3 to read any independent sound unit structuring the stored digital voice signal Svd as a digital voice signal unit Svu.
The frequency component analyzer 7 applies fast Fourier transform conversion to the digital voice signal unit Svu provided by the memory 3, and performs frequency spectrum analysis. Based on a result obtained by the frequency spectrum analysis performed with respect to the digital voice signal unit Svu, the frequency component analyzer 7 generates a frequency component signal Sfc.
The pitch determination device 9 extracts a first formant from the frequency component signal Sfc outputted from the frequency component analyzer 7, and refers to a first formant of the sample voice (in the sample voice data storage 13) previously stored in the pitch determination device 9 to find a difference in pitch between the input voice (Sva, Svd, Svu) and the sample voice. Based on thus found pitch difference, the pitch determination device 9 generates a pitch change rate signal Scr which indicates a level for the input voice (Svd, Sva, Svu) to be changed to coincide with the sample pitch.
Based on the pitch change rate signal Scr provided by the pitch determination device 9, the read-out clock controller 11 controls a read-out clock frequency with respect to the memory 3 so as to generate a read-out clock Scc.

The memory 3 thus reads out the digital voice signal Svd stored therein with the timing specified by the read-out clock Scc so as to output the pitch-normalized digital voice signal Svc, which is a signal obtained by adjusting the digital voice signal Svd in pitch in accordance with the pitch of the sample voice. Specifically, the pitch-normalized digital voice signal Svc has a predetermined pitch relationship with the reference voice frequency component pattern Psf. Surely, the predetermined pitch relationship does not necessarily mean identicalness therebetween, and the capability of the voice recognition device VRAp (especially the voice analyzer 15) naturally determines the acceptable range therefor.

The voice analyzer 15 analyzes the pitch-normalized digital voice signal Svc provided by the memory 3, and then outputs a recognition signal Src which indicates the one coinciding with the reference voice frequency component pattern Psf read from the sample voice data storage 13.

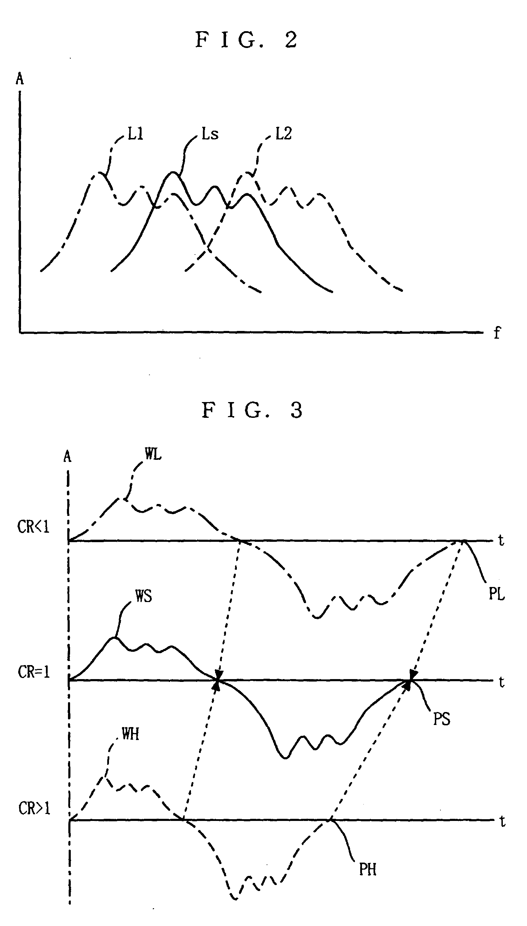

With reference to FIGS. 2 and 3, described next is the operational principle of the voice recognition device VRAp.

FIG. 2 shows exemplary frequency spectra obtained by applying fast Fourier transform to the digital voice signal Svc in the frequency component analyzer 7. In the drawing, the lateral axis indicates frequency f, while the longitudinal axis indicates strength A. Therein, exemplarily, a one-dot line L1 indicates a typical example of voice frequency spectrum of the digital voice signal Svd including a voice uttered by a man, while a broken line L2 indicates a typical example of voice frequency spectrum of the digital voice signal Svd including a voice uttered by a woman or a child.

A solid line Ls indicates an exemplary voice frequency spectrum stored in the sample voice data storage 13 as the sample voice data for voice recognition. Generally, even if the same voice (word) is uttered, as indicated by the one-dot line L1, the frequency spectrum for the man covers the lower frequency region side compared with the sample voice. On the other hand, as indicated by the broken line L2, the frequency spectrum for the woman or child covers the higher frequency region side compared with the sample voice.

Assuming that a first formant frequency, which is a base frequency of each of those frequency components, is f1, f2, and fs, respectively, such base frequency remains approximately invariant for the same speaker. The first formant frequency is now briefly described. In a voice waveform converted from time domain to frequency domain, observed generally under 5kHz are four or five peaks called formants, which are rather important to identify vowels. Those formants are named as a first formant, a second formant, a third formant, and the like, in an ascending order of frequency. Here, the first formant of a voice uttered by the same speaker shows approximate invariance regardless of the voice being a sound unit or a phrase structured by several sound units.

The same reason is applicable thereto as, already described in the foregoing, the shape and size of the speaker's throat determines a reference speech frequency of his/her voice. That is, a difference between the first formant frequency of a voice uttered by unlimited speakers and a first formant frequency spectrum of sample voice data is practically invariant for the same speaker regardless of his/her gender, age, or the type of words uttered. In more detail, the first formant of a sound string shows invariance for the same speaker regardless of the uttered voice being one sound unit or a word or phase structured by several sound units.

In consideration of this fact, in the present invention, the pitch determination device 9 first determines a first formant frequency of a voice uttered by unlimited speakers based on a frequency component signal Sfc, and then determines a base frequency fi (hereinafter, referred to as "input voice base frequency fi") of the voice. Then, in the pitch determination device 9, the input voice base frequency fi is compared with a base frequency fs of the sample voice data (hereinafter, referred to as "sample voice base frequency fs"), and a pitch ratio CR of the input voice base frequency fi to the sample voice base frequency fs is calculated according to the following equation (2).

$$CR = fs/fi \qquad (2)$$

As described in the foregoing, the first formant frequency is uniquely determined, acoustically, by the shape (length, thickness) of a speaker's throat. Specifically, a man's throat is often longer and thicker, and thus a base frequency fm of his voice is lower than the base frequency fs of the sample voice. As a result, the pitch ratio CR is larger than 1. On the other hand, a higher-pitched woman's or a child's throat is often shorter and thinner, and thus a base frequency fc thereof is higher than the base frequency fs of the sample voice. As a result, the pitch ratio CR is smaller than 1. With such general tendency, the pitch ratio CR is inherent in each speaker. The frequency component analyzer 7 generates a pitch change rate signal Scr which shows a value of the pitch ratio CR.

Based on the pitch change rate signal Scr provided by the pitch determination device 9, the read-out clock controller 11 reads the digital voice signal Svd from the memory 3 with the CR-fold timing compared with the sampling timing of the digital voice signal Svd, thereby generating the pitch-normalized digital voice signal Svc. For such purpose, the memory 3 is composed of a circulating memory, which is generally called as a ring memory.

In the case that the pitch ratio CR is larger than 1, that is, when the input voice (Svd) is lower in pitch, the digital voice signal Svd is read from the memory 3 with a timing earlier than the sampling clock to generate a pitch-normalized digital voice signal Svc. On the other hand, in the case that the pitch ratio CR is smaller than 1, that is, when the input voice (Svd) is higher in pitch, the digital voice signal Svd is read with a timing later than the sampling clock to generate a pitch-normalized digital voice signal Svc.

With reference to FIG. 3, the pitch change processing in the pitch change device 9 is described in more detail. In the drawing, the lateral axis indicates time t, while the longitudinal axis indicates strength A of the voice. A waveform WS shows an exemplary temporal change of a voice waveform stored in the sample voice data storage 13. A waveform WL shows a voice waveform (e.g., a man's voice) lower in pitch than the sample voice data, and a waveform WH shows a voice waveform (e.g., a woman's or a child's voice) higher in pitch than the sample voice data. In the drawing, one period in the waveform WS, the waveform WL, and the waveform WH is respectively denoted by PL, PS, and PH. The periods PL and PH are both equivalent to a reciprocal of the input voice base frequency fi in the above, and the period PS is equivalent to a reciprocal of the sample voice base frequency fs.

In order to convert the waveform WL in pitch according to the waveform WS, a read-out clock which is faster (PL/PS-fold) than a sampling clock which is used to A/D convert the input voice waveform may be used. Also, in order to convert the waveform WH in pitch according to the waveform WS, a read-out clock which is slower (PH/PS-fold) than a sampling clock which is used to A/D convert the input voice waveform may be used. That is, a read-out clock can be obtained by converting a sampling clock based on the pitch ratio CR defined by the above equation (2).

In such manner, obtained will be the pitch-normalized digital voice signal Svc if the pitch of the digital voice signal Svd is changed in accordance with the pitch of the sample voice. However, if the pitch is increased, the time axis of the voice waveform becomes shorter, and if the pitch is decreased, the time axis of the voice waveform becomes longer, and consequently the voice speed changes. To get around such problem, the voice speed can be adjusted by adding a vowel waveform to increase the pitch, and decimating the vowel waveform to decrease the pitch. However, this technique is well-known, and is not the object of the present invention, and thus is not described or shown herein. Also, changing the frequency of the read-out clock can be easily done with a conventionally known frequency dividing clock of a master clock.

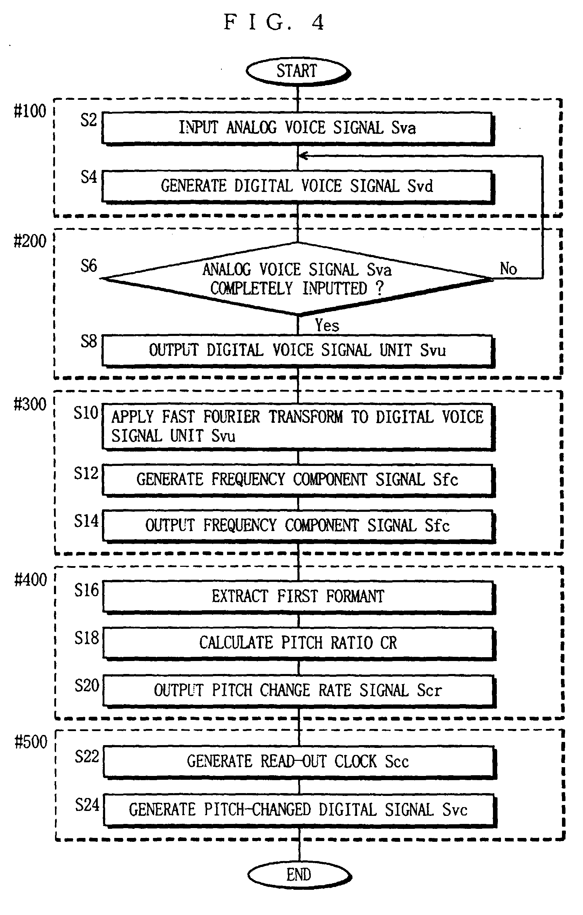

Next, with reference to FIG. 4 for a flowchart, described is the operation of the input voice normalization device Tr incorporated in the voice recognition device VRAp. Once the voice recognition device VRAp was activated, the operation of voice recognition is started.

In step S2, a voice uttered by unlimited speakers comes through a microphone, for example, and inputted into the A/D converter 1 as an analog voice signal Sva. The procedure then goes to a next step S4.

In step S4, the A/D converter 1 sequentially subjects the analog voice signal Sva to A/D conversion. Then, thus produced digital voice signal Svd is outputted to the memory 3. Note that, the above steps of S2 and S4 are a subroutine #100 for accepting an input voice uttered by a speaker.

In step S6, the read-out controller 5 monitors the memory 3 for its input status to judge whether the speaker's voice input (analog voice signal Sva) has been through. In this judgement, for example, a length of time having no input of analog voice signal Sva is referred to to see whether reaching a predetermined threshold value. Alternatively, the speaker may use some appropriate means to inform the voice recognition device VRAp or the voice input pitch normalization device Tr that the signal input is now through.

If the speaker keeps speaking, the judgement is No, therefore the procedure returns to the above-described step S4 to continue to generate the digital voice signal Svd, and input the signal to the memory 3. Once the analog voice signal Sva which is an independent voice string structured by one or more sound units uttered by the speaker was completely inputted, the determination is Yes. Then, the procedure goes to a next step S8.

In step S8, the read-out controller 5 brings the memory 3 to read a digital sound signal unit Svu corresponding to any independent voice string structuring the digital voice signal Svd stored therein for output to the frequency component analyzer 7. The digital voice signal unit Svu is the one to be voice recognized by the voice recognition device VRAp. The procedure then goes to a next step S10. Herein, the above-described steps S6 and S8 are a recognition target voice extraction subroutine #200 for extracting a voice for recognition out of the voice uttered by the speaker.

Instep S10, the frequency component analyzer 7 applies fast Fourier transform to the digital voice signal unit Svu provided by the memory 3, and then analyzes the frequency spectrum (FIG. 2) of the digital voice signal unit Svu. The procedure then goes to a next step S12.

In step S12, the frequency component analyzer 7 generates a frequency component signal Sfc as described by referring to FIG. 2. The procedure then goes to a next step S14.

In step S14, the frequency component analyzer 7 outputs the generated frequency component signal Sfc to the pitch determination device 9. The procedure then goes to a next step S16. Here, the above-described steps of S10, S12, and S14 are a subroutine #300 for analyzing the frequency spectrum of the digital voice signal unit Svu.

In step S16, based on the frequency component signal Sfc inputted from the frequency component analyzer 7, the pitch determination device 9 extracts a first formant, which is a base frequency, from the input voice (digital voice signal unit Svu). The procedure then goes to a next step S18.

In step S18, the pitch determination device 9 compares the first formant extracted in step S16 with a first formant of the sample voice data stored in the sample voice data storage 13, and then calculates a pitch ratio CR according to the above equation (2). The procedure then goes to a next step S20.

In step S20, the pitch determination device 9 generates a pitch change rate signal Scr, which indicates the pitch ratio CR, for output to the read-out clock controller 11. The procedure then goes to a next step S22. Here, the above-described steps of S16, S18, and S20 are a pitch determination subroutine #400 for determining whether the input voice is higher or lower in pitch compared with the sample voice.

In step S22, based on the pitch change rate signal Scr provided by the pitch determination device 9, the read-out clock controller 11 generates a read-out clock Scc, which determines a timing to read out the memory 3. The procedure then goes to a next step S24.

In step S24, based on the read-out clock Scc, the pitch-normalized digital voice signal Svc is read from the memory 3. Here, the above-described steps of S22 and S24 area subroutine #500 for normalizing the input voice in pitch.

As described above, the pitch-normalized digital voice signal Svc generated through the subroutines of #100, #200, #300, #400, and #500 is provided to the voice analyzer 15, and therein, compared with the sample voice data stored in the sample voice data storage 13 for recognition processing. The voice analyzer 15 also generates and outputs a recognition signal Src which indicates a recognition result obtained thereby.

In the pitch determination subroutine #400 (S16), although the base frequency (first formant) can be detected in one sound unit, the whole words uttered may be taken an average. This is because, as already described in the foregoing, the first formant of a voice uttered by the same speaker shows approximate invariance regardless of the voice being a sound unit or a voice structured by several sound units.

Further, for effective pitch change, the pitch ratio CR does not have to be definite, and is approximated in the unit of 100 ¢ (cent), which is commonly used for pitch change. The voice analyzer 15 calculates coincidence between the voice frequency component pattern stored in the sample voice data storage 13, for voice recognition, which refers to the voice digital signal (pitch-normalized digital voice signal Svc) changed in pitch as such, and an input voice frequency component pattern. And thus voice recognition analysis is carried out.

Since an input voice uttered by unlimited speakers is changed to be equal in pitch to previously-stored sample voice data, there is no need to have several groups of sample voice data. Further, voice recognition can be achieved at better rate while dealing with a wide frequency range covering unlimited speakers' voices. Herein, instead of changing the input voice (digital voice signal Svd) to be equal in pitch to the sample voice data, the sample voice data may be changed to be equal in pitch to the input voice (digital voice signal Svd).

As is known from the above, according to the voice recognition device of the present invention, a frequency component of an input voice signal is analyzed, and the input voice is changed in pitch to be equal to the sample voice data for voice recognition. Thereby, voice recognition can be done at better rate no matter how speakers' tones vary. Further, there is no need to have several groups of sample voice data, accordingly memory can be reduced in capacity.

INDUSTRIAL APPLICABILITY

As described in the foregoing, the present invention is effective for such application that requiring recognition of voice uttered by unlimited speakers such as a television.

**Claims**

1. An input voice pitch normalization device equipped in a voice recognition device for recognizing an input voice uttered by unlimited speakers based on voice recognition sample data, and used to change a pitch of the input voice to be in a predetermined relationship with a pitch of the voice recognition sample data, said input voice pitch normalization device comprising:

    pitch difference determination means for determining a pitch difference between said input voice and said voice recognition sample data; and
    pitch change means for changing, on the basis of the pitch difference determined by said pitch difference determination means, said input voice in frequency to make the pitch of the input voice have the predetermined relationship with the pitch of said voice recognition sample data.

2. The input voice pitch normalization device as claimed in claim 1, further comprising:

    memory means for temporarily storing said input voice; and
    read-out control means for reading a string of said input voice from said memory means, and generating a recognition target voice signal, and

said pitch difference determination means comprising:

frequency component analysis means for analyzing a frequency component in said recognition target voice signal, and generating a frequency component signal; and

pitch determination means for finding a base frequency of said recognition target voice signal based on said frequency component signal, and determining a pitch difference between said voice recognition sample data and the base frequency to generate a pitch difference signal.

3. The input voice pitch normalization device as claimed in claim 2, wherein said pitch determination means can stably determine the pitch difference regardless of said recognition target voice as being structured by a single or several sound units by finding a first formant of said recognition target voice signal as the base frequency, and by comparing the first formant of the recognition target voice signal with a first formant of said voice recognition sample data to find said pitch difference therebetween.

4. The input voice pitch normalization device as claimed in claim 3, wherein said pitch change means comprises

read-out clock control means for generating a read-out clock signal by determining a frequency of a timing clock at the time of reading from said memory in such a manner that a frequency of said recognition target voice signal is changed based on said pitch difference signal, and

said memory outputs, based on said read-out clock, said recognition target voice signal in such a manner that a predetermined relationship in pitch is established with said voice recognition sample data.

5. A voice recognition device including the input voice pitch normalization device of claim 4.

6. A voice recognition device for recognizing an input voice uttered by unlimited speakers based on voice recognition sample data, said device comprising:

an input voice pitch normalization device for changing a pitch of the input voice to be in a predetermined relationship with a pitch of the voice recognition sample data; and

voice analysis means for comparing said input voice changed in pitch and said voice recognition sample data to generate a recognition signal indicating the voice recognition sample data which coincides with the input voice.

7. The voice recognition device as claimed in claim 6, further comprising:

memory means for temporarily storing said input voice; and

read-out control means for reading a string of said input voice from said memory means, and generating a recognition target voice signal, and

said pitch difference determination means comprising:

frequency component analysis means for analyzing a frequency component of said recognition target voice signal, and generating a frequency component signal; and

pitch determination means for finding a base frequency of said recognition target voice signal based on said frequency component signal, and determining a pitch difference between said voice recognition sample data and the base frequency to generate a pitch difference signal.

8. The voice recognition device as claimed in claim 7, wherein said pitch determination means can stably determine the pitch difference regardless of said recognition target voice as being structured by a single or several sound units by finding a first formant of said recognition target voice signal as the base frequency, and by comparing the first formant of the recognition target voice signal with a first formant of said voice recognition sample data to find said pitch difference therebetween.

9. The voice recognition device as claimed in claim 8, wherein said pitch change means comprises

read-out clock control means for generating a read-out clock signal by determining a frequency of a timing clock at the time of reading from said memory in such a manner that a frequency of said recognition target voice signal is changed based on said pitch difference signal, and

said memory outputs, based on said read-out clock, said recognition target voice signal in such a manner that a predetermined relationship in pitch is established with said voice recognition sample data.

EP 1 102 240 A1

F I G. 2

F I G. 3

# F I G. 4

START

**#100**
S2 | INPUT ANALOG VOICE SIGNAL Sva

S4 | GENERATE DIGITAL VOICE SIGNAL Svd

**#200**
S6 | ANALOG VOICE SIGNAL Sva COMPLETELY INPUTTED ?   No

Yes

S8 | OUTPUT DIGITAL VOICE SIGNAL UNIT Svu

**#300**
S10 | APPLY FAST FOURIER TRANSFORM TO DIGITAL VOICE SIGNAL UNIT Svu

S12 | GENERATE FREQUENCY COMPONENT SIGNAL Sfc

S14 | OUTPUT FREQUENCY COMPONENT SIGNAL Sfc

**#400**
S16 | EXTRACT FIRST FORMANT

S18 | CALCULATE PITCH RATIO CR

S20 | OUTPUT PITCH CHANGE RATE SIGNAL Scr

**#500**
S22 | GENERATE READ-OUT CLOCK Scc

S24 | GENERATE PITCH-CHANGED DIGITAL SIGNAL Svc

END

# F I G. 5

VRAc

```
┌─────────────────┐      ┌─────────────────┐      ┌─────────────────┐
│   111           │      │   114           │      │   115           │
│ VOICE INPUT PART│─────►│ SPEECH SPEED    │─────►│ VOICE RECOGNITION│────► RECOGNITION
│                 │   │  │ CHANGE PART     │      │ PART            │      RESULT
└─────────────────┘   │  └─────────────────┘      └─────────────────┘
                      │           ▲
                      │           │
                      │  ┌─────────────────┐
                      │  │   113           │
                      │  │ SPEECH SPEED    │
                      │  │ CHANGE RATE     │
                      │  │ DETERMINATION PART│
                      │  └─────────────────┘
                      │           ▲
                      │           │
                      │  ┌─────────────────┐
                      │  │   112           │
                      └─►│ SPEECH SPEED    │
                         │ CALCULATION PART│
                         └─────────────────┘
```

EP 1 102 240 A1

# INTERNATIONAL SEARCH REPORT

| International application No. |
| --- |
| PCT/JP00/03113 |

| | |
| --- | --- |
| A. CLASSIFICATION OF SUBJECT MATTER<br>Int.Cl⁷ G10L15/20, 21/04 | |

According to International Patent Classification (IPC) or to both national classification and IPC

| B. FIELDS SEARCHED |
| --- |
| Minimum documentation searched (classification system followed by classification symbols)<br>Int.Cl⁷ G10L11/00-21/06 |

| Documentation searched other than minimum documentation to the extent that such documents are included in the fields searched |
| --- |
| Jitsuyo Shinan Koho    1926-1995    Toroku Jitsuyo Shinan Koho  1994-2000<br>Kokai Jitsuyo Shinan Koho  1971-2000    Jitsuyo Shinan Toroku Koho  1996-2000 |

| Electronic data base consulted during the international search (name of data base and, where practicable, search terms used) |
| --- |
| JICST FILE(JOIS), INSPEC(DIALOG), WPI(DIALOG), PATOLIS,<br>IBM Technical Disclosure Bulletin, IEEE/IEE Electronic Library |

## C. DOCUMENTS CONSIDERED TO BE RELEVANT

| Category* | Citation of document, with indication, where appropriate, of the relevant passages | Relevant to claim No. |
| --- | --- | --- |
| A | Seichi NAKAGAWA et al., "Spoken Word Recognition Based on Normalization of Speaker Differences Spectra", IEICE Technical Report, [Automaton], Vol.79, No.200, AL79-78, pp.79-86, (issued on 20 December, 1979) | 1-9 |
| A | JP, 46-205, B1 (Matsushita Electric Ind. Co., Ltd.) 06 January, 1971 (06.01.79) (Family: none) | 1-9 |
| A | JP, 6-214596, A (Ricoh Company, Ltd.), 05 August, 1994 (05.08.94) (Family: none) | 1-9 |
| A | EP, 290190, B1 (Oki Electric Industry Company), 09 October, 1991 (09.10.91) & JP, 6-40277, B2 & US, 4916743, A | 1-9 |
| A | JP, 2-275997, A (Oki Electric Industry Co., Ltd.), 09 November, 1990 (09.11.90) (Family: none) | 1-9 |
| A | JP, 2-275999, A (Oki Electric Industry Co., Ltd.), | 1-9 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>07 June, 2000 (07.06.00) | Date of mailing of the international search report<br>20 June, 2000 (20.06.00) |
| --- | --- |
| Name and mailing address of the ISA/<br>Japanese Patent Office | Authorized officer |
| Facsimile No. | Telephone No. |

Form PCT/ISA/210 (second sheet) (July 1992)

EP 1 102 240 A1

## INTERNATIONAL SEARCH REPORT

| International application No. |
| --- |
| PCT/JP00/03113 |

C (Continuation).   DOCUMENTS CONSIDERED TO BE RELEVANT

| Category* | Citation of document, with indication, where appropriate, of the relevant passages | Relevant to claim No. |
| --- | --- | --- |
| | 09 November, 1990 (09.11.90)<br>(Family: none) | |
| A | JP, 9-325798, A (Matsushita Electric Ind. Co., Ltd.),<br>16 December, 1997 (16.12.97)<br>(Family: none) | 1-9 |
| A | JP, 4-102900, A (Matsushita Electric Ind. Co., Ltd.),<br>03 April, 1992 (03.04.92)<br>(Family: none) | 1-9 |
| A | EP, 390037, B1 (Matsushita Electric Industrial Co., Ltd.)<br>10 August, 1994 (10.08.94)<br>& JP, 2853147, B2    & US, 5131042, A | 1-9 |

Form PCT/ISA/210 (continuation of second sheet) (July 1992)